(19) Europäisches Patentamt
European Patent Office
Office européen des brevets

(11) Numéro de publication: **0 287 445 B1**

(12) # FASCICULE DE BREVET EUROPEEN

(45) Date de publication de fascicule du brevet: **16.12.92**

(51) Int. Cl.$^5$: **D06M 15/277**, B01F 17/00

(21) Numéro de dépôt: **88400862.4**

(22) Date de dépôt: **11.04.88**

(54) **Emulsions de produits fluorés et procédé pour leur mise en oeuvre.**

(30) Priorité: **14.04.87 FR 8705307**

(43) Date de publication de la demande:
**19.10.88 Bulletin 88/42**

(45) Mention de la délivrance du brevet:
**16.12.92 Bulletin 92/51**

(84) Etats contractants désignés:
**BE CH DE GB IT LI NL**

(56) Documents cités:
**EP-A- 0 149 347**
**FR-A- 2 038 255**
**GB-A- 2 116 970**
**US-A- 3 042 642**
**US-A- 3 778 381**

(73) Titulaire: **INSTITUT TEXTILE DE FRANCE**
**35, rue des Abondances, B.P. 79**
**F-92105 Boulogne-Billancourt Cédex(FR)**

(72) Inventeur: **Poulenard, Jacques**
**112, rue Dr E. Locard**
**F-69005 Lyon(FR)**
Inventeur: **Gavet, Louis**
**110, rue Dr Ed Locard**
**F-69005 Lyon(FR)**
Inventeur: **Chatelin, Roger**
**36, allée Mont d'Or Bois-Dieu**
**F-69380 Lissieu(FR)**
Inventeur: **Giorgio, Annie**
**21, rue Alfred Brinon**
**F-69100 Villeurbanne(FR)**

(74) Mandataire: **Hasenrader, Hubert et al**
**Cabinet BEAU DE LOMENIE 55, rue d'Amsterdam**
**F-75008 Paris(FR)**

EP 0 287 445 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention concerne des émulsions de produits fluorés ou perfluorés, saturés ou insaturés, liquides en phase aqueuse, lesdits produits étant choisis parmi des monomères, des homopolymères ou des copolymères à composantes fluorées susceptibles d'être mis en émulsion.

La mise en émulsion d'un liquide dans un autre liquide est une technique connue qui met généralement en oeuvre, outre une agitation mécanique, une certaine quantité d'agents tensio-actifs. On demande à une émulsion d'être stable dans le temps, c'est-à-dire que la répartition des particules (en taille et dans le volume) du liquide en émulsion dans l'autre liquide reste homogène et constante pendant une durée assez longue. Or, à la connaissance de la demanderesse, les émulsions de produits fluorés, non seulement demandent une forte agitation mécanique et une grande quantité d'agents tensio-actifs, mais encore ne sont pas stables dans le temps.

Le document US-A-3 778 381 décrit une micro-émulsion de produits fluorés liquides dans un système aqueux, et plus particulièrement de composés organiques fluorés ayant plus de 4 atomes de carbone. Cette micro-émulsion est préparée en mélangeant le produit fluoré avec un fluorohalocarbone à bas point d'ébullition, qui est soit miscible au produit fluoré soit un solvant de celui-ci, en ajoutant ce mélange à un système aqueux contenant un agent tensio-actif tout en agitant jusqu'à formation de la micro-émulsion, et en retirant le fluorohalocarbone par évaporation.

Ainsi, selon ce document, on procède à la micro-émulsion souhaitée en mettant en oeuvre un composé fluoré intermédiaire et un agent tensio-actif. Ce composé fluoré intermédiaire doit pouvoir être micro-émulsionné dans le système aqueux contenant l'agent tensio-actif. Il doit être aussi miscible au produit fluoré ou solvant de celui-ci et avoir un point d'ébullition bas pour pouvoir être évacué de la micro-émulsion par évaporation. Il s'agit d'un fluorohalocarbone ayant au plus 4 atomes de carbone. En ce qui concerne l'agent tensio-actif ou émulsifiant, il s'agit d'un agent tradionnel, et de préférence un agent ayant des terminaisons perfluoroisopropoxy. Sont cités des oxydes d'amines fluorés et des fluoroalcools. L'émulsifiant est employé en proportion entre 25 et 120 pourcent en poids du composé fluorocarboné qui doit être mocroémulsionné.

Or, on a trouvé, et c'est ce qui fait l'objet de l'invention, une émulsion de produits fluorés simple à être mise en oeuvre et présentant la stabilité requise. L'émulsion selon l'invention est caractérisée par la présence en complément du produit fluoré de la morpholine ou un de ses dérivés.

Le dérivé de la morpholine peut être un de ses dérivés saturés ou insaturés , avantageusement non-ioniques . Parmi des dérivés saturés, on choisira par exemple la N-méthylmorpholine ($C_5H_{11}NO$), le morpholinoéthanol ($C_6H_{13}NO_2$) ou le morpholinoisopropanol ($C_7H_{15}NO_2$). Parmi les dérivés insaturés, on retiendra particulièrement l'acrylate de morpholinoéthyl ($C_9H_{15}NO_3$) et le méthacrylate de morpholinoéthyl ($C_{10}H_{17}NO_3$) que l'on désignera dans la suite de la description par MEMA,de formule développée :

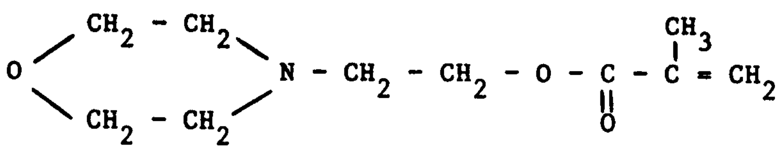

On sait que certains dérivés de la morpholine ont déjà été utilisés comme émulsifiants. C'est le cas du savon d 'amine obtenu par réaction d'acides gras sur un dérivé de la morpholine, mis en oeuvre dans des émulsions de cires selon les brevets FR-A-1.270.244, FR-A-2 122 043 et FR-A-827 911. C'est le cas de dérivés cationiques de morpholine mis en oeuvre dans des émulsions d'organopolysiloxane selon le brevet FR-A-2 038 255 ou dans des émulsions de latex polymériques selon le brevet US-A-4 029 658. A la connaissance de la demanderesse, les dérivés de la morpholine n'ont pas été utilisés pour la mise en émulsion de produits fluorés, et plus particulièrement les dérivés non-ioniques de la morpholine.

Parmi les produits fluorés les plus difficiles à mettre en émulsion par les techniques connues et dont la mise en oeuvre est facilitée par le procédé de l'invention, on retiendra les produits perfluorés et en particulier le 3,3,4,4,5,5,6,6,7,7,8,8,8-tridécafluorooctyl méthacrylate que l'on désignera dans la suite de la description par FOMA, de formule développée :

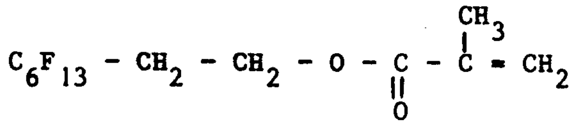

C'est un autre objet de l'invention que de revendiquer un procédé de préparation de l'émulsion précitée. Selon le procédé de l'invention, on ajoute au produit fluoré de la morpholine ou un de ses dérivés en présence d'au moins un agent tensio-actif puis on ajoute à la solution obtenue, sous agitation mécanique, la quantité de liquide souhaitée. De façon tout-à-fait inattendue, la présence du dérivé de la morpholine facilite la mise en émulsion et confère à l'émulsion une très bonne stabilité. Il semble que le dérivé de la morpholine joue le rôle de co-solvant par rapport au produit fluoré. En présence d'une faible quantité de liquide, de l'ordre de quelques pourcents, le mélange obtenu s'apparente à une solution ; en présence d'une quantité de liquide plus importante , l'ensemble s'émulsionne.

Le dérivé de la morpholine et le produit fluoré sont tels que décrits ci-dessus. Les agents tensio-actifs utilisés sont de type connu, ionique ou non-ionique. Ils peuvent être fluorés.

Les proportions relatives entre les différents constituants de l'émulsion sont très variables, fonction de la concentration recherchée en produits à émulsionner.

Préférentiellement, le rapport molaire entre la morpholine ou son dérivé et le produit fluoré est de l'ordre de 2. Compte-tenu de la masse molaire double du FOMA par rapport au MEMA, le rapport pondéral préféré entre le MEMA et le FOMA est de l'ordre de l'unité.

Préférentiellement, la quantité en poids de l'agent tensio-actif est de l'ordre de ou inférieure à 10 % du poids cumulé de la morpholine ou de son dérivé et du produit à émulsionner.

On a obtenu avec le MEMA et le FOMA des résultats conformes à l'invention dans la gamme de concentration pondérale suivante :

| | |
|---|---|
| - méthacrylate de morpholinoéthyl (MEMA) | de 0,25 à 25 % |
| - 3,3,4,4,5,5,6,6,7,7,8,8,8-tridécafluorooctyl méthacrylate (FOMA) | de 0,25 à 25 % |
| - tensio-actif | de 0,1 à 50 % |
| - eau | complément à 100 % |

L'invention sera mieux comprise grâce à la description qui va suivre d'exemples de réalisation.

Exemple 1 :

On prend deux cents grammes de FOMA auxquels on ajoute dix gramnes d'un tensio-actif non-ionique. On ajoute sous agitation mécanique environ 1,8 litre d'eau. Lorsqu'on cesse l'agitation mécanique, on constate que l'émulsion décante immédiatement . En l'absence de dérivés de la morpholine, l'émulsion se casse dès qu'il ny a plus d'agitation.

Exemple 2 :

On prend cent grammes de FOMA auxquels on ajoute cent grammes de MEMA et dix grammes d'un tensio-actif non-ionique. Le mélange obtenu s'apparente à une solution. On ajoute, sous agitation mécanique, une certaine quantité d'eau. Après avoir ajouté 1,8 litre d'eau , la concentration totale en monomères (MEMA et FOMA) étant de l'ordre de 10 %, on obtient une émulsion translucide. Si l'on continue d'ajouter de l'eau , par exemple 18 litres supplémentaires pour arriver à une concentration en monomère de 1 %, on obtient une émulsion qui a l'apparence d'une solution transparente. Les émulsions obtenues sont stables dans le temps.

Exemple 3 :

Pour vérifier la bonne stabilité de l'émulsion quant à la taille des particules , on réalise une émulsion selon l'invention à partir de dix grammes de FOMA auxquels on ajoute dix grammes de MEMA et un gramme de tensio-actif non-ionique, puis on ajoute 1,8 litre d'eau sous agitation mécanique. On obtient une émulsion translucide qui s'apparente à une solution. La concentration totale en monomère (MEMA,FOMA) est de l'ordre de 1 %. On mesure la taille des particules par diffusion de la lumière à l'aide d'un appareil

diffusé sous la marque "COULTER NANO SIZER [(R)]" de la société COULTER ELECTRONICS LTD. Les résultats obtenus sont repris dans le tableau suivant :

| temps (heure) | taille (en nanomètres) |
|---|---|
| 1 | 230 |
| 3 | 270 |
| 6,5 | 306 |
| 24 | 360 |

La taille des particules évolue , mais l'émulsion ne se casses pas.

Exemple 4 :

Pour vérifier la bonne stabilité de l'émulsion dans le temps, on réalise une émulsion selon l'invention à partir de cinquante grammes de FOMA auxquels on ajoute cinquante grammes de MEMA, et cinq grammes de tensio-actif non-ionique puis, sous agitation, 1,8 litre d'eau. On obtient une émulsion translucide ayant l'apparence d'une solution, dont la concentration totale en monomères est de l'ordre de 5 %.

On place cent grammes de cette émulsion dans une colonne de décantation et on surveille visuellement son évolution. Après 48 heures , on ne constate aucun dépôt dans le fond de la colonne. Après une semaine, un dépôt s'est formé mais on retrouve l'émulsion par simple agitation mécanique.

**Revendications**

1. Emulsion de produits fluorés ou perfluorés, saturés ou insaturés, liquides en phase aqueuse, lesdits produits étant choisis parmi des monomères, homopolymères ou copolymères à composantes fluorées, caractérisée en ce qu'elle comporte en complément dudit produit fluoré de la morpholine ou un de ses dérivés et un agent tensio-actif.

2. Emulsion selon la revendication 1 , caractérisée en ce que le dérivé de la morpholine est un dérivé non-ionique saturé, tel que la N-méthylmorpholine, le morpholino-éthanol ou le morpholino isopropanol.

3. Emulsion selon la revendication 1 , caractérisée en ce que le dérivé de la morpholine est un dérivé non-ionique insaturé, tel que l'acrylate ou le méthacrylate de morpholinoéthyl.

4. Emulsion selon l'une quelconque des revendications 1 à 4, caractérisée en ce que le produit fluoré est un produit perfluoré.

5. Emulsion selon la revendication 5 , caractérisée en ce que le produit fluoré est le 3,3,4,4,5?5,6,6,7,7,8,8,8-tridécafluorooctyl méthacrylate de formule :

$$C_6F_{13} - CH_2 - CH_2 - O - \underset{\underset{O}{\|}}{C} - \overset{\overset{CH_3}{|}}{C} = CH_2$$

6. Procédé de mise en émulsion d'un produit fluoré ou perfluoré, saturé ou insaturé, liquide en phase aqueuse, ledit produit étant choisi parmi des monomères, homopolymères ou copolymères à composantes fluorées, caractérisé en ce qu'il consiste à ajouter audit produit fluoré de la morpholine ou un de ses dérivés en présence d'au moins un agent tensio-actif et à ajouter, sous agitation mécanique, la quantité d'eau souhaitée.

7. Procédé selon la revendication 7, caractérisé en ce que le rapport molaire de la morpholine ou de son

dérivé et du produit fluoré est sensiblement égal à deux.

**8.** Procédé selon l'une des revendications 7 ou 8 caractérisé en ce que le dérivé de la morpholine est le méthacrylate de morpholinoéthyl et le produit à émulsionner est le 3,3,4,4,5,5,6,6,7,7,8,8,8-tridécafluorooctyl méthacrylate.

**9.** Procédé selon l'une quelconque des revendications 7 à 9 , caractérisé en ce que la quantité en poids d'agent tensio-actif est de l'ordre de ou inférieure à 10 % du poids total de la morpholine ou de son dérivé et du produit à émulsionner.

## Claims

**1.** Emulsion of liquid fluorinated or perfluorinated, saturated or non-saturated products in aqueous phase, said products being selected from monomers, homopolymers or copolymers with fluorinated components, characterized in that it comprises, in complement of said fluorinated product, morpholine or one of its derivatives and a surface-active agent.

**2.** Emulsion according to claim 1, characterized in that the derivative of morpholine is a saturated non-ionic derivative, such as N-methylmorpholine, morpholino-ethanol or morpholino-isopropanol.

**3.** Emulsion according to claim 1, characterized in that the derivative of morpholine is a non-saturated non-ionic derivative, such as morpholinoethyl acrylate or methacrylate.

**4.** Emulsion according to any one of claims 1 to 3, characterized in that the fluorinated product is a perfluorinated product.

**5.** Emulsion according to claim 4, characterized in that the fluorinated product is 3,3,4,4,5,5,6,6,7,7,8,8,8-tridecafluorooctyl methacrylate of formula:

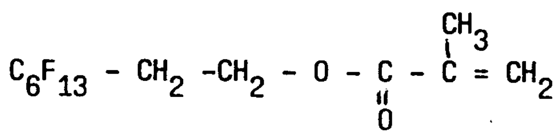

**6.** Process for placing a liquid fluorinated or perfluorinated, saturated or non-saturated product in aqueous phase, said product being selected from monomers, homopolymers or copolymers with fluorinated components, characterized in that it consists in adding to said fluorinated product morpholine or one of its derivatives in the presence of at least one surface-active agent and in adding, with mechanical stirring, the desired quantity of water.

**7.** Process according to claim 6, characterized in that the molar ration of the morpholine or of its derivative and of the fluorinated product is substantially equal to two.

**8.** Process according to one of claims 6 or 7, characterized in that the derivative of morpholine is morpholinoethyl methacrylate and the product to be emulsified is 3,3,4,4,5,5,6,6,7,7,8,8,8-tridecafluorooctyl methacrylate.

**9.** Process according to any one of claims 6 to 8, characterized in that the quantity by weight of the surface-active agent is of the order of or less than 10% of the total weight of the morpholine or of its derivative and of the product to be emulsified.

## Patentansprüche

**1.** Emulsion von flüssigen fluorierten oder perfluorierten, gesättigten oder ungesättigten Produkten in wäßriger Phase, die ausgewählt sind unter Monomeren, Homopolymeren oder Copolymeren mit fluorierten Anteilen, dadurch gekennzeichnet, daß sie zusätzlich zum fluorierten Produkt Morpholin oder

eines seiner Derivate und ein grenzflächenaktives Mittel enthält.

**2.** Emulsion nach Anspruch 1, dadurch gekennzeichnet, daß das Morpholinderivat ein nichtionisches gesättigtes Derivat wie N-Methylmorpholin, Morpholinoethanol oder Morpholinoisopropanol ist.

**3.** Emulsion nach Anspruch 1, dadurch gekennzeichnet, daß das Morpholinderivat ein nichtionisches ungesättigtes Derivat wie Morpholinoethylacrylat oder Morpholinoethylmethacrylat ist.

**4.** Emulsion nach einem der Ansprüche 1 bis 3, dadurch gekennzeichnet, daß das fluorierte Produkt ein perfluoriertes Produkt ist.

**5.** Emulsion nach Anspruch 4, dadurch gekennzeichnet, daß das fluorierte Produkt 3,3,4,4,5,5,6,6,7,7,8,8,8-Tridecafluoroctylmethacrylat der Formel ist:

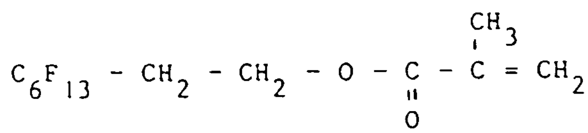

**6.** Verfahren zur Emulgierung eines flüssigen fluorierten oder perfluorierten, gesättigten oder ungesättigten Produktes in wäßriger Phase, das ausgewählt ist unter Monomeren, Homopolymeren oder Copolymeren mit fluorierten Anteilen, dadurch gekennzeichnet, daß dem fluorierten Produkt Morpholin oder eines seiner Derivate in Gegenwart von mindestens einem grenzflächenaktiven Mittel und unter mechanischem Rühren die erwünschte Menge Wasser zugegeben wird.

**7.** Verfahren nach Anspruch 6, dadurch gekennzeichnet, daß das molare Verhältnis zwischen Morpholin oder seinem Derivat und dem fluorierten Produkt ungefähr gleich zwei ist.

**8.** Verfahren nach einem der Ansprüche 6 oder 7, dadurch gekennzeichnet, daß das Morpholinderivat Morpholinoethylmethacrylat und das zu emulgierende Produkt 3,3,4,4,5,5,6,6,7,7,8,8,8-Tridecafluoroctylmethacrylat ist.

**9.** Verfahren nach einem der Ansprüche 6 bis 8, dadurch gekennzeichnet, daß die Menge an grenzflächenaktivem Mittel, bezogen auf das Gewicht, in der Größenordnung von oder unter 10 % des Gesamtgewichts des Morpholins oder seines Derivats und des zu emulgierenden Produkts liegt.